# EUROPÄISCHE PATENTSCHRIFT

(11) **EP 3 348 035 B1**
(45) Veröffentlichungstag und Bekanntmachung des Hinweises auf die Patenterteilung: **03.11.2021**
(21) Anmeldenummer: 16754193.7
(22) Anmeldetag: 25.07.2016
(51) Int. Cl.: H04L 29/06, H04L 12/40, H04L 29/12

(54) **VERFAHREN ZUR ÜBERMITTLUNG VON TELEGRAMMEN, BUSSYSTEM UND VERFAHREN ZUR VERGABE VON KENNUNGEN**
METHOD FOR TRANSMITTING MESSAGES, BUS SYSTEM AND METHOD FOR ALLOCATING IDENTIFIERS
PROCÉDÉ DE TRANSFERT DE TÉLÉGRAMME, SYSTÈME DE BUS ET PROCÉDÉ D'ATTRIBUTION D'INDICATIF

(30) Priorität: 11.09.2015 DE 102015011653; 31.05.2016 DE 102016006428
(43) Veröffentlichungstag der Anmeldung: 18.07.2018
(73) Patentinhaber: SEW-EURODRIVE GmbH & Co. KG, 76646 Bruchsal (DE)
(72) Erfinder: EHMANN, Valentin, 73563 Mögglingen (DE); SIMON, Olaf, D-76646 Bruchsal, Untergrombach (DE); HOFFMANN, Julian, 67729 Sippersfeld (DE)
(86) Internationale Anmeldenummer: PCT/EP2016/025080
(87) Internationale Veröffentlichungsnummer: WO 2017/041897

(56) Entgegenhaltungen:
- DE-A1-102011 087 509
- BOSCH: "CAN Specification, version 2.0", BOSCH CAN SPECIFICATION VERSION 2.0, XX, XX, 1. Januar 1991 (1991-01-01), Seiten 1-72, XP002219808,

## Beschreibung

Die Erfindung betrifft ein Verfahren zur Übermittlung von Telegrammen.

Aus der DE 10 2012 009 191 A1 sind ein Verfahren und eine Vorrichtung zur zyklischen digitalen Übertragung eines Positionswertes eines bewegten Objektes mit träger Masse bekannt.

Die DE 10 2011 087 509 A1 zeigt eine Sensorübertragungsvorrichtung und ein Verfahren zur Übertragung von Nutzdaten von einer Mehrzahl von Sensoren an eine Bussteuervorrichtung für ein Fahrzeug.

In der DE 10 2014 100 628 A1 ist ein Bussystem und ein Verfahren zur Übertragung von Daten in Echtzeit offenbart.

Aus der Veröffentlichung BOSCH: "CAN Specification, version 2.0", BOSCH CAN SPECIFICATION VERSION 2.0, XX, XX, 1. Januar 1991, Seite 1 - 72 ist als nächstliegender Stand der Technik ein Verfahren zur Datenübermittlung bekannt.

Der Erfindung liegt daher die Aufgabe zugrunde, ein Verfahren zur Übermittlung von Telegrammen weiterzubilden, wobei die Sicherheit verbessert werden soll.

Die Erfindung wird durch die unabhängigen Ansprüche definiert. Weitere Ausführungsformen der Erfindung sind durch die abhängigen Ansprüche definiert. Obwohl die Erfindung nur durch die Ansprüche definiert ist, sind die nachstehenden Ausführungsformen, Beispiele und Aspekte zum besseren Verständnis des Hintergrunds und der Vorteile der Erfindung vorhanden.

Erfindungsgemäß wird die Aufgabe bei dem Verfahren zur Übermittlung von Telegrammen nach den in Anspruch 1 angegebenen Merkmalen angegebenen Merkmalen gelöst.

Von Vorteil ist dabei, dass die Kennung verkürzbar ist im Vergleich zu Bussystemen mit eindeutiger Zuordnung der Kennung zu einem Busteilnehmer und/oder eindeutiger Zuordnung der Kennung zu einer Absender-Empfänger-Kombination. Somit ist die Übertragungszeit der Kennung verkürzbar.

Vorteilhafterweise sind zeitkritische Daten, wie zum Beispiel Positionsmessungen, vom ersten Busteilnehmer an den zweiten Busteilnehmer schneller übertragbar. Der erste Busteilnehmer erkennt ein Telegramm, das nicht von dem ersten Busteilnehmer selbst versendet wurde, aber eine Kennung aufweist, die nur von dem ersten Busteilnehmer und/oder dem zweiten Busteilnehmer als Absender verwendbar ist. Somit ist dem Telegramm vom ersten Busteilnehmer eindeutig der zweite Busteilnehmer als Absender zuordenbar.

Dabei ist der erste Busteilnehmer verschieden von dem zweiten Busteilnehmer.

Bei einer vorteilhaften Ausgestaltung wird die Kennung zeitlich vor der zu übertragenden Information gesendet. Von Vorteil ist dabei, dass ein unvollständig eingelesenes Telegramm vom ersten Busteilnehmer an den zweiten Busteilnehmer oder vom zweiten Busteilnehmer an den ersten Busteilnehmer eindeutig dem ersten oder zweiten Busteilnehmer zuordenbar ist.

Bei einer vorteilhaften Ausgestaltung wird zuerst die Kennung des Telegramms ausgewertet, wobei die Kennung mittels einer Tabelle einer Untermenge von möglichen Absendern und Empfängern zugeordnet wird, die kleiner ist als die Menge aller Absender und Empfänger des Bussystems, wobei danach die Telegrammlänge ausgewertet wird, wobei die Telegrammlänge mittels der Tabelle eindeutig einem Absender und einem Empfänger aus der Untermenge zugeordnet wird. Von Vorteil ist dabei, dass dem Telegramm mittels der Kennung, der Telegrammlänge und der Tabelle in einfacher Art und Weise der Absender und Empfänger eindeutig zuordenbar sind. Somit ist die Sicherheit verbessert.

Vorteilhafterweise weist die Tabelle vier Spalten auf, wobei in einer ersten Spalte die von dem Bussystem verwendbaren Kennungen eingetragen sind, wobei in einer zweiten Spalte die von dem Bussystem verwendbaren Telegrammlängen eingetragen sind, wobei in einer dritten Spalte die der jeweiligen Kombination von Kennung und Telegrammlänge zuordenbaren Absender eingetragen sind und wobei in einer vierten Spalte die der jeweiligen Kombination von Kennung und Telegrammlänge zuordenbaren Empfänger eingetragen sind. Jede Zeile der Tabelle weist also eine Absender-Empfänger-Kombination auf, die einer Kombination von Kennung und Telegrammlänge eindeutig zuordenbar ist.

Vorteilhafterweise weist jeder Busteilnehmer eine Speichereinheit auf, in der die Tabelle abspeicherbar ist, so dass die Zuordnung eines Absenders und eines Empfängers zu einem jeweiligen Telegramm für jeden Busteilnehmer ausführbar ist.

Bei einer vorteilhaften Ausgestaltung empfängt der erste Busteilnehmer ein erstes Telegramm von einem anderen Busteilnehmer, das eine Kennung aufweist, die von dem ersten Busteilnehmer als Absender verwendbar ist, wobei der erste Busteilnehmer das erste Telegramm bis einschließlich der zu übertragenden Information einliest und eine Aktion auslöst. Von Vorteil ist dabei, dass der erste Busteilnehmer das erste Telegramm unvollständig einliest. Somit ist die Zeit für das Einlesen des Telegramms verkürzbar im Vergleich zu einem vollständigen Einlesen des Telegramms.

Bei einer vorteilhaften Ausgestaltung liest der erste Busteilnehmer das Telegramm unvollständig ein. Von Vorteil ist dabei, dass die Zeit für das Einlesen des Telegramms verkürzbar ist im Vergleich zu einem vollständigen Einlesen des Telegramms.

Bei einer vorteilhaften Ausgestaltung weist jedes Telegramm eine Prüfinformation auf, die zeitlich nach der zu übertragenden Information gesendet wird, wobei der erste Busteilnehmer ein zweites Telegramm von einem anderen Busteilnehmer empfängt, das eine Kennung aufweist, die verschieden von den von dem ersten Busteilnehmer als Absender verwendbaren Kennungen ist, wobei der erste Busteilnehmer das zweite Telegramm vollständig einliest, eine Aktion auslöst
und/oder
das zweite Telegramm mittels der Prüfinformation überprüft und bei einer Abweichung der Telegrammlänge von einem Sollwert für die Telegrammlänge und/oder bei einer Abweichung der Prüfinformation von einem Sollwert für die Prüfinformation eine Sicherheitsaktion ausführt, insbesondere wie Anzeige und/oder Übermittlung einer Warninformation und/oder Abschalten eines Gerätes und/oder Auslösen eines sicheren Zustands des Gerätes. Von Vorteil ist dabei, dass das Telegramm auf Übertragungsfehler überprüfbar ist. Vorteilhafterweise wertet der erste Busteilnehmer die zu übertragende Information und die Telegrammlänge und/oder die Prüfinformation zeitgleich und/oder zeitlich parallel aus. Somit ist die Auswertezeit verkürzbar. Falls eine Abweichung der Telegrammlänge von einem Sollwert für die Telegrammlänge und/oder eine Abweichung der Prüfinformation von einem Sollwert für die Prüfinformation um mehr als einen jeweiligen kritischen Wert festgestellt wird, ist die Sicherheitsaktion vor der Aktion ausführbar. Falls keine Abweichung festgestellt wird, ist die Aktion direkt ausführbar. Somit ist die Sicherheit des Verfahrens verbessert ohne die Geschwindigkeit der Auswertung der zu übertragenden Information zu reduzieren.

Bei einer vorteilhaften Ausgestaltung liest ein dritter Busteilnehmer das erste und/oder zweite Telegramm vollständig ein, wobei der dritte Busteilnehmer das erste und/oder zweite Telegramm mittels der Telegrammlänge und/oder der Prüfinformation überprüft und bei einer Abweichung der Telegrammlänge von einem Sollwert für die Telegrammlänge und/oder bei einer Abweichung der Prüfinformation von einem Sollwert für die Prüfinformation eine Sicherheitsaktion ausführt, insbesondere wie Anzeige und/oder Übermittlung einer Warninformation und/oder Abschalten eines Gerätes und/oder Auslösen eines sicheren Zustands eines Gerätes. Von Vorteil ist dabei, dass das jeweilige Telegramm von dem dritten Busteilnehmer und dem ersten Busteilnehmer zeitgleich und/oder zeitlich parallel auswertbar ist. Dabei ist die Auswertung der zu übertragenden Information von dem ersten Busteilnehmer ausführbar und die Überprüfung der Telegrammlänge und/oder der Prüfinformation von dem dritten Busteilnehmer ausführbar. Vorteilhafterweise ist der erste Busteilnehmer von dem dritten Busteilnehmer überwachbar. Somit ist die Sicherheit verbessert.

Bei einer vorteilhaften Ausgestaltung ist die Anzahl der in dem Bussystem vorhandenen Kombinationen von Busteilnehmern als Absender und Empfänger größer als die Anzahl der Kennungen. Von Vorteil ist dabei, dass die Länge der Kennung verkürzbar ist im Vergleich zu einem Bussystem mit einer eindeutigen Zuordnung einer jeweiligen Kennung zu einem jeweiligen Absender und einem jeweiligen Empfänger. Somit ist auch die Übertragungszeit verkürzbar.

Bei einer vorteilhaften Ausgestaltung weist die Kennung einen Binärcode auf. Von Vorteil ist dabei, dass die Kennung in einfacher Art und Weise übertragbar ist.

Bei einer vorteilhaften Ausgestaltung ist der erste Busteilnehmer ein Umrichter, der ein Gerät, insbesondere Antrieb, regelt, insbesondere wobei der Umrichter als Aktion eine Stellgröße bestimmt, wobei der zweite Busteilnehmer ein Positionssensor, insbesondere erster Positionssensor, ist, der zeitlich wiederkehrend eine Position, insbesondere Winkelposition einer Welle des Gerätes oder Linearposition des Gerätes, bestimmt, wobei der dritte Busteilnehmer eine Überwachungseinrichtung ist. Von Vorteil ist dabei, dass der Umrichter überwachbar ist mittels der Überwachungseinrichtung. Vorteilhafterweise bestimmt die Überwachungseinrichtung die Stellgröße redundant zu dem Umrichter und vergleicht die ermittelten Stellgrößen miteinander. Dabei ist bei einer Abweichung um mehr als einen kritischen Wert eine Sicherheitsaktion auslösbar. Vorteilhafterweise sind der Umrichter, der Positionssensor und die Überwachungseinrichtung mittels des Datenbusses schnell und sicher verbindbar.

Bei einer vorteilhaften Ausgestaltung ist der erste Busteilnehmer ein Positionssensor, insbesondere erster Positionssensor, der zeitlich wiederkehrend eine Position, insbesondere Winkelposition einer Welle des Gerätes oder Linearposition des Gerätes, bestimmt, insbesondere wobei der Positionssensor als Aktion ein Telegramm mit einer Positionsinformation sendet, wobei der zweite Busteilnehmer ein Umrichter ist, der das Gerät, insbesondere den Antrieb regelt, wobei der dritte Busteilnehmer eine Überwachungseinrichtung ist. Von Vorteil ist dabei, dass der Umrichter überwachbar ist mittels der Überwachungseinrichtung. Vorteilhafterweise bestimmt die Überwachungseinrichtung die Stellgröße redundant zu dem Umrichter und vergleicht die ermittelten Stellgrößen miteinander. Dabei ist bei einer Abweichung um mehr als einen kritischen Wert eine Sicherheitsaktion auslösbar. Vorteilhafterweise sind der Umrichter, der Positionssensor und die Überwachungseinrichtung mittels des Datenbusses schnell und sicher verbindbar.

Bei einer vorteilhaften Ausgestaltung weist das Bussystem einen zweiten Positionssensor auf, der redundant zu dem ersten Positionssensor die Position, insbesondere Winkelposition einer Welle des Gerätes oder Linearposition des Gerätes, bestimmt. Von Vorteil ist dabei, dass die von dem ersten Positionssensor bestimmte Position vergleichbar ist mit der von dem zweiten Positionssensor bestimmten Position. Somit ist eine Fehlfunktion des ersten oder zweiten Positionssensors feststellbar. Die Sicherheit ist verbessert.

Bei einer vorteilhaften Ausgestaltung sendet der erste Positionssensor Telegramme mit Positionsinformationen an den Umrichter und der zweite Positionssensor Telegramme mit Positionsinformationen an die Überwachungseinrichtung. Von Vorteil ist dabei, dass die Positionsinformationen der zwei Positionssensoren unabhängig voneinander auswertbar sind. Somit ist die Sicherheit verbessert.

Bei einer vorteilhaften Ausgestaltung weist das Bussystem einen Sensor auf, insbesondere einen Temperatursensor, der zeitlich wiederkehrend die Temperatur des Gerätes bestimmt. Von Vorteil ist dabei, dass die Temperatur des Gerätes von dem Umrichter und/oder der Überwachungseinrichtung überwachbar ist. Bei einer Abweichung der Temperatur von einem Sollwert der Temperatur um mehr als einen kritischen Wert ist eine Sicherheitsaktion ausführbar.

Bei einer vorteilhaften Ausgestaltung weist das erste Telegramm eine zeitkritische Information, insbesondere Position, insbesondere Winkelposition einer Welle des Gerätes oder Linearposition des Gerätes, oder ein Triggersignal, auf. Von Vorteil ist dabei, dass zeitkritische Informationen zwischen dem Umrichter und dem ersten Positionssensor schneller übertragbar sind, da das erste Telegramm unvollständig einlesbar ist und dennoch eindeutig dem Absender und dem Empfänger zuordenbar ist.

Bei einer vorteilhaften Ausgestaltung weist das zweite Telegramm Initialisierungsdaten und/oder Parametrierdaten, insbesondere Fehlerstatusdaten, auf. Von Vorteil ist dabei, dass die Telegramme eine verkürzte Kennung aufweisen, da das zweite Telegramm mittels der Kennung und der Telegrammlänge eindeutig dem Absender und dem Empfänger zuordenbar ist.

Wichtige Merkmale der Erfindung bei dem Bussystem zur Durchführung eines Verfahrens zur Übermittlung von Telegrammen sind, dass
das Bussystem zumindest einen Umrichter, einen Positionssensor, insbesondere ersten Positionssensor, und eine Überwachungseinrichtung aufweist,
wobei der Umrichter zur Regelung eines Gerätes, insbesondere Antriebes, eingerichtet ist,
wobei der Positionssensor zur Bestimmung einer Position, insbesondere Winkelposition einer Welle des Gerätes oder Linearposition des Gerätes, eingerichtet ist,
wobei der Umrichter und/oder der Positionssensor und/oder die Überwachungseinrichtung mittels digitaler Schnittstellen miteinander verbunden sind.

Von Vorteil ist dabei, dass der Umrichter überwachbar ist mittels der Überwachungseinrichtung. Vorteilhafterweise sind der Umrichter, der Positionssensor und die Überwachungseinrichtung mittels der digitalen Schnittstellen des Datenbusses schnell und sicher verbindbar.

Bei einer vorteilhaften Ausgestaltung ist die Überwachungseinrichtung zur Bestimmung von Regelparametern für das Gerät eingerichtet und weist Vergleichsmittel auf, mit denen die Regelparameter mit von dem Umrichter bestimmten Regelparametern vergleichbar sind. Von Vorteil ist dabei, dass die Überwachungseinrichtung die Regelparameter redundant zu dem Umrichter bestimmt und die ermittelten Regelparameter miteinander vergleicht. Dabei ist bei einer Abweichung um mehr als einen kritischen Wert eine Sicherheitsaktion auslösbar.

Bei einer vorteilhaften Ausgestaltung weist das Bussystem einen zweiten Positionssensor auf, wobei der zweite Positionssensor zur redundanten Bestimmung einer Position, insbesondere Winkelposition einer Welle des Gerätes oder Linearposition des Gerätes, eingerichtet ist, wobei der zweite Positionssensor mittels einer digitalen Schnittstelle mit dem Umrichter und/oder dem ersten Positionssensor und/oder der Überwachungseinrichtung verbunden ist. Von Vorteil ist dabei, dass die von dem ersten Positionssensor bestimmte Position vergleichbar ist mit der von dem zweiten Positionssensor redundant bestimmten Position. Somit ist ein defekter erster oder zweiter Positionssensor erkennbar und eine Sicherheitsaktion auslösbar. Vorteilhafterweise sind die Positionen unabhängig voneinander mittels des Umrichters und der Überwachungseinrichtung auswertbar.

Bei einer vorteilhaften Ausgestaltung weist das Bussystem einen Sensor auf, wobei der Sensor mittels einer digitalen Schnittstelle mit dem Umrichter und/oder dem ersten Positionssensor und/oder der Überwachungseinrichtung und/oder dem zweiten Positionssensor verbunden ist. Von Vorteil ist dabei, dass mittels des Sensors ein weiterer Parameter des Antriebs überwachbar ist, wie beispielsweise der Motorstrom. Somit ist die Sicherheit verbessert.

Bei einer vorteilhaften Ausgestaltung ist der Sensor zur Bestimmung der Temperatur des Gerätes, insbesondere Antriebes, eingerichtet. Von Vorteil ist dabei, dass die Temperatur des Gerätes von dem Umrichter und/oder der Überwachungseinrichtung überwachbar ist. Bei einer Abweichung der Temperatur von einem Sollwert der Temperatur um mehr als einen kritischen Wert ist eine Sicherheitsaktion ausführbar.

Weitere Vorteile ergeben sich aus den Unteransprüchen.

Die Erfindung wird nun anhand einer Abbildung näher erläutert:

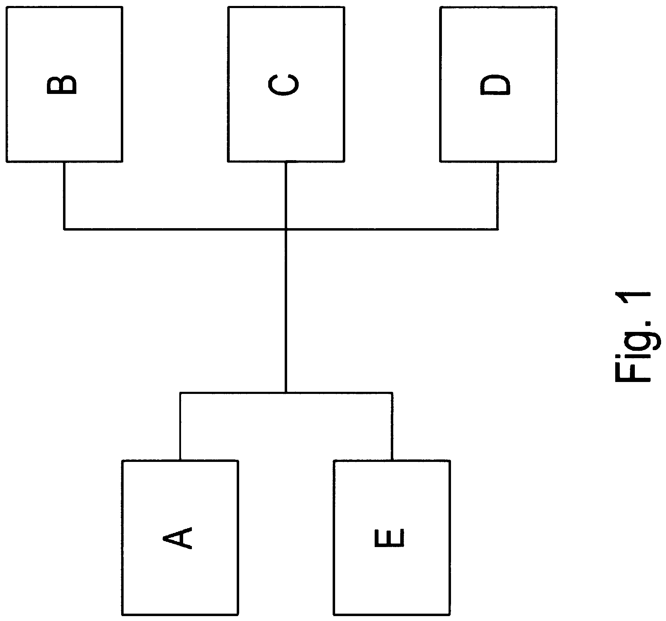

In der Figur 1 ist ein erfindungsgemäßes Bussystem schematisch dargestellt.

Das Bussystem weist fünf Busteilnehmer auf, die mittels digitaler Schnittstellen miteinander verbunden sind:
- einen Umrichter A, der ein Gerät, insbesondere Antrieb, regelt,
- einen ersten Positionssensor B, der zeitlich wiederkehrend eine Position, insbesondere Winkelposition einer Welle des Gerätes oder Linearposition des Gerätes, bestimmt,
- einen zweiten Positionssensor C, der redundant zu dem ersten Positionssensor B zeitlich wiederkehrend die Position, insbesondere Winkelposition einer Welle des Gerätes oder Linearposition des Gerätes, bestimmt,
- einen Sensor D, insbesondere ein Temperatursensor, der zeitlich wiederkehrend die Temperatur des Gerätes, insbesondere des Antriebes, bestimmt, und
- eine Überwachungseinrichtung E.

Die Busteilnehmer kommunizieren miteinander mittels Telegrammen, die über das Bussystem versendet werden.

Jedes Telegramm weist eine Kennung, eine zu übertragende Information, insbesondere Daten, eine Prüfinformation und eine Telegrammlänge auf. Die Kennung wird zeitlich vorder zu übertragenden Information gesendet. Die zu übertragende Information wird zeitlich vor der Prüfinformation gesendet.

Das Bussystem ist als Datenbus ausgeführt. Das Bussystem und/oder der Datenbus ist realisiert mittels der digitalen Schnittstellen.

Jedes Telegramm wird mittels der Kennung und der Telegrammlänge eindeutig einer Absender-Empfänger-Kombination zugeordnet.

Der Umrichter A sendet Telegramme an den ersten Positionssensor B und/oder den zweiten Positionssensor C und/oder den Sensor D.

Die Überwachungseinrichtung E sendet Telegramme an den ersten Positionssensor B und/oder den zweiten Positionssensor C und/oder den Sensor D.

Der erste Positionssensor B sendet Telegramme an den Umrichter A und/oder die Überwachungseinrichtung E.

Der zweite Positionssensor C sendet Telegramme an den Umrichter A und/oder die Überwachungseinrichtung E.

Der Sensor D sendet Telegramme an den Umrichter A und/oder die Überwachungseinrichtung E.

Somit weist das Bussystem zwölf mögliche Absender-Empfänger-Kombinationen auf.

Die Kennung weist einen zweistelligen Binärcode auf. Somit weist das Bussystem vier verschiedene Kennungen auf.

Das Bussystem weist also mehr Absender-Empfänger-Kombinationen auf als Kennungen.

Ein Telegramm, insbesondere ein erster Telegrammtyp, das von dem Umrichter A an den ersten Positionssensor B gesendet wird, weist die gleiche Kennung auf wie ein Telegramm, das von dem ersten Positionssensor B an den Umrichter A gesendet wird, insbesondere "11".

Ein Telegramm, insbesondere ein zweiter Telegrammtyp, das von dem Umrichter A an den zweiten Positionssensor C gesendet wird, weist die gleiche Kennung auf wie ein Telegramm, das von dem zweiten Positionssensor C an den Umrichter A gesendet wird, insbesondere "10".

Telegramme des ersten Telegrammtyps und/oder des zweiten Telegrammtyps sind zeitkritische Telegramme. Beispielsweise enthalten diese Telegramme Triggersignale des Umrichters A oder Positionsinformationen des ersten Positionssensors B oder des zweiten Positionssensors C. Vorteilhafterweise ist für den Empfänger dieser Telegramme schon anhand der Kennung erkennbar, wer der Absender des Telegrammes ist. Das Telegramm wird also unvollständig eingelesen.

Zur Initialisierung des Bussystems werden ebenfalls Telegramme, insbesondere ein dritter Telegrammtyp, versendet. Dabei versendet der Umrichter A ein Telegramm an den jeweiligen Sensor (B, C, D), dieses Telegramm enthält beispielsweise Initialisierungsdaten. Der jeweilige Sensor (B, C, D) sendet ein Telegramm an den Umrichter A und/oder die Überwachungseinrichtung E, dieses Telegramm enthält beispielsweise Fehlerstatusdaten des jeweiligen Sensors (B, C, D). Diese Telegramme weisen ebenfalls eine identische Kennung auf, insbesondere "01". Zur eindeutigen Zuordnung der Absender-Empfänger-Kombination zu dem jeweiligen Telegramm, wird das Telegramm vollständig eingelesen und die Absender-Empfänger-Kombination mittels der Kennung und der Telegrammlänge dem jeweiligen Telegramm zugeordnet.

Weitere Daten, wie beispielsweise Parametrierdaten, werden mittels Telegrammen, insbesondere eines vierten Telegrammtyps, unter den Busteilnehmern versendet. Diese Telegramme weisen ebenfalls eine identische Kennung auf, insbesondere "00". Zur eindeutigen Zuordnung der Absender-Empfänger-Kombination zu dem jeweiligen Telegramm, wird das jeweilige Telegramm vollständig eingelesen und die Absender-Empfänger-Kombination mittels der Kennung und der Telegrammlänge dem jeweiligen Telegramm zugeordnet.

Bei einer nicht dargestellten erfindungsgemäßen Ausführungsform speist der Umrichter A einen Elektromotor. Der erste und zweite Positionssensor (B, C) sind jeweils als Winkelsensor ausgeführt und mit einer Rotorwelle des Elektromotors drehfest verbunden und/oder mit einer Welle eines von dem Elektromotor angetriebenen Getriebes drehfest verbunden. Somit ist die Winkelstellung der Welle und/oder der Rotorwelle bestimmbar.

Die an die Signalelektronik des Umrichters A übertragene Winkelstellung wird von einer Regeleinheit des Umrichters A verwendet, um den Motorstrom durch Stellen der Motorspannung auf einen gewünschten Sollwert zu regeln.

Dazu verwendet die Regeleinheit die übertragene Winkelstellung zur Bestimmung eines Spannungsraumzeigers, welcher von einer pulsweitenmoduliert angesteuerten Leistungselektronik des Umrichters erzeugt und zur Speisung des Elektromotors verwendet wird.

Die Regeleinheit bestimmt jeweils zyklisch den neuen Spannungsraumzeiger. Dazu wird zuerst nur die Winkelstellung aus dem von dem Winkelsensor übertragenen Telegramm ausgelesen, der neue Spannungsraumzeiger bestimmt und der Elektromotor entsprechend des neuen Spannungsraumzeigers geregelt. Danach wird das Telegramm vollständig eingelesen und mittels der Telegrammlänge und der Prüfinformation, beispielsweise einem CRC-Datum (cyclic redundancy check-Datum), auf Abweichungen des ermittelten Wertes für die Telegrammlänge von einem Sollwert für die Telegrammlänge und/oder des ermittelten Wertes für die Prüfinformation von einem Sollwert für die Prüfinformation überprüft. Bei einer Abweichung führt der Umrichter A eine Sicherheitsaktion aus, wie beispielsweise die Anzeige und/oder Übermittlung einer Warninformation und/oder das Abschalten des Elektromotors und/oder das Auslösen eines sicheren Zustands des Elektromotors, insbesondere Not-Aus oder Sicherer Halt.

Der zweite Winkelsensor sendet ein Telegramm mit einer redundanten zweiten Winkelstellung der Welle an die Überwachungseinrichtung E. Die Überwachungseinrichtung E liest das Telegramm vollständig ein und prüft das Telegramm auf Abweichungen des ermittelten Wertes für die Telegrammlänge von einem Sollwert für die Telegrammlänge und/oder des ermittelten Wertes für die Prüfinformation von einem Sollwert für die Prüfinformation. Danach wird ein Spannungsraumzeiger aus der zweiten Winkelstellung bestimmt und mit dem von der Regeleinheit erzeugten Spannungsraumzeiger verglichen. Bei einer Abweichung der Telegrammlänge und/oder der Prüfinformation und/oder des Spannungsraumzeigers um mehr als einen jeweiligen kritischen Wert führt die Überwachungseinrichtung E eine Sicherheitsaktion aus, wie beispielsweise die Anzeige und/oder Übermittlung einer Warninformation und/oder das Abschalten des Elektromotors und/oder das Auslösen eines sicheren Zustands des Elektromotors, insbesondere Not-Aus oder Sicherer Halt.

Das erfindungsgemäße Verfahren zur Übermittlung von Telegrammen weist die folgenden Verfahrensschritte auf:
In einem ersten Verfahrensschritt sendet ein zweiter Busteilnehmer ein erstes Telegramm an den ersten Busteilnehmer mittels des Datenbusses. Dabei weist das erste Telegramm eine Kennung auf, die sowohl vom ersten Busteilnehmer als auch vom zweiten Busteilnehmer als Absender verwendbar ist.

In einem zweiten Verfahrensschritt liest der erste Busteilnehmer die Kennung des ersten Telegrammes ein und ordnet den ersten Busteilnehmer als Empfänger des ersten Telegramms und den zweiten Busteilnehmer als Absender des ersten Telegramms eindeutig dem ersten Telegramm zu.

In einem dritten Verfahrensschritt liest der erste Busteilnehmer die zu übertragende Information des ersten Telegramms ein, wertet die zu übertragende Information aus und löst eine Aktion aus.

In einem vierten Verfahrensschritt sendet der zweite Busteilnehmer ein weiteres Telegramm an den dritten Busteilnehmer mittels des Datenbusses.

In einem fünften Verfahrensschritt liest der dritte Busteilnehmer die Kennung des weiteren Telegramms ein und ordnet dem weiteren Telegramm mittels der Kennung und einer Tabelle eine Untermenge von Absender-Empfänger-Kombinationen der Menge aller in dem Bussystem möglichen Absender-Empfänger-Kombinationen zu. Dabei ist die Untermenge der Absender-Empfänger-Kombinationen kleiner als die Menge aller in dem Bussystem möglichen Absender-Empfänger-Kombinationen.

In einem sechsten Verfahrensschritt liest der dritte Busteilnehmer das weitere Telegramm vollständig ein und bestimmt die Telegrammlänge. Mittels der Telegrammlänge und der Tabelle ordnet der dritte Busteilnehmer dem weiteren Telegramm eindeutig eine Absender-Empfänger-Kombination aus der Untermenge der Absender-Empfänger-Kombinationen zu, insbesondere den zweiten Busteilnehmer als Absender und den dritten Busteilnehmer als Empfänger.

In einem siebten Verfahrensschritt wertet der dritte Busteilnehmer die Prüfinformation aus. Der dritte Busteilnehmer vergleicht die Prüfinformation mit einem Sollwert für die Prüfinformation und/oder die Telegrammlänge mit einem Sollwert für die Telegrammlänge. Bei einer Abweichung von dem jeweiligen Sollwert um mehr als einen jeweiligen kritischen Wert, löst der dritte Busteilnehmer eine Sicherheitsaktion aus.

Vorteilhafterweise liest der erste Busteilnehmer nach dem dritten Verfahrensschritt das erste Telegramm vollständig ein und wertet die Telegrammlänge und/oder die Prüfinformation aus. Der erste Busteilnehmer vergleicht die Prüfinformation mit einem Sollwert für die Prüfinformation und/oder die Telegrammlänge mit einem Sollwert für die Telegrammlänge. Bei einer Abweichung von dem jeweiligen Sollwert um mehr als einen jeweiligen kritischen Wert, löst der erste Busteilnehmer eine Sicherheitsaktion aus.

### Bezugszeichenliste

- A: Umrichter
- B: erster Positionssensor
- C: zweiter Positionssensor
- D: Sensor, insbesondere Temperatursensor
- E: Überwachungseinrichtung

## Patentansprüche

1. Verfahren zur Übermittlung von Telegrammen zwischen mindestens drei Busteilnehmern (A, B, C, D, E) eines Bussystems,
wobei jedes Telegramm eine Kennung, eine zu übertragende Information und eine Telegrammlänge aufweist,
wobei ein jeweiliges Telegramm von einem Busteilnehmer (A, B, C, D, E) als Absender (A, B, C, D, E) versendet wird und von einem weiteren Busteilnehmer (A, B, C, D, E) als Empfänger (A, B, C, D, E) ausgelesen, insbesondere ausgewertet, wird,
**dadurch gekennzeichnet, dass**
der Absender (A, B, C, D, E) und der Empfänger (A, B, C, D, E) des jeweiligen Telegramms mittels der jeweiligen Kennung und der jeweiligen Telegrammlänge dem jeweiligen Telegramm eindeutig zugeordnet werden,
wobei ein erster Busteilnehmer (A, B) und ein zweiter Busteilnehmer (B, A) Telegramme mit identischer Kennung versenden,
wobei in einem ersten Verfahrensschritt der zweite Busteilnehmer (B, A) ein Telegramm an den ersten Busteilnehmer (A, B) sendet,
wobei jeder Busteilnehmer eine Speichereinheit aufweist, die derart eingerichtet ist, dass in der Speichereinheit eine Tabelle abspeicherbar ist, so dass die Zuordnung eines Absenders und eines Empfängers zu einem jeweiligen Telegramm für jeden Busteilnehmer ausführbar ist,
wobei die Tabelle auf allen Busteilnehmern vorgehalten wird,
wobei in der Tabelle 4-Tupel die Zuordnungsvorschrift zwischen Sender, Empfänger, Kennung und Länge des Telegramms festhalten,
wobei in einem zweiten Verfahrensschritt der erste Busteilnehmer (A, B) die Kennung des Telegramms einliest und in der in seiner Speichereinheit vorhandenen Tabelle den ersten Busteilnehmer (A, B) als Empfänger des Telegramms abspeichert und den zweiten Busteilnehmer (B, A) als Absender des Telegramms abspeichert und eindeutig dem Telegramm zuordnet,
insbesondere wobei die Kennung zeitlich vor der zu übertragenden Information gesendet wird.

2. Verfahren zur Übermittlung von Telegrammen nach Anspruch 1,
**dadurch gekennzeichnet, dass**
zuerst die Kennung des Telegramms ausgewertet wird, wobei die Kennung mittels einer Tabelle einer Untermenge von möglichen Absendern (A, B, C, D, E) und Empfängern (A, B, C, D, E) zugeordnet wird, die kleiner ist als die Menge aller Absender (A, B, C, D, E) und Empfänger (A, B, C, D, E) des Bussystems,
wobei danach die Telegrammlänge ausgewertet wird, wobei die Telegrammlänge mittels der Tabelle eindeutig einem Absender (A, B, C, D, E) und einem Empfänger (A, B, C, D, E) aus der Untermenge zugeordnet wird.

3. Verfahren zur Übermittlung von Telegrammen nach mindestens einem der vorangegangenen Ansprüche,
**dadurch gekennzeichnet, dass**
der erste Busteilnehmer (A, B) ein erstes Telegramm von einem anderen Busteilnehmer (A, B, C, D, E) empfängt, das eine Kennung aufweist, die von dem ersten Busteilnehmer (A, B) als Absender (A, B, C, D, E) verwendbar ist,
wobei der erste Busteilnehmer (A, B) das erste Telegramm bis einschließlich der zu übertragenden Information einliest und eine Aktion auslöst,
insbesondere wobei der erste Busteilnehmer (A, B) das erste Telegramm unvollständig einliest.

4. Verfahren zur Übermittlung von Telegrammen nach mindestens einem der vorangegangenen Ansprüche,
**dadurch gekennzeichnet, dass**
jedes Telegramm eine Prüfinformation aufweist, die zeitlich nach der zu übertragenden Information gesendet wird,
wobei der erste Busteilnehmer (A, B) ein zweites Telegramm von einem anderen Busteilnehmer (A, B, C, D, E) empfängt, das eine Kennung aufweist, die verschieden von den von dem ersten Busteilnehmer (A, B) als Absender (A, B, C, D, E) verwendbaren Kennungen ist,
wobei der erste Busteilnehmer (A, B) das zweite Telegramm vollständig einliest und eine Aktion auslöst
und/oder
wobei der erste Busteilnehmer (A, B) das zweite Telegramm vollständig einliest und das zweite Telegramm mittels der Prüfinformation überprüft und bei einer Abweichung der Telegrammlänge von einem Sollwert für die Telegrammlänge und/oder bei einer Abweichung der Prüfinformation von einem Sollwert für die Prüfinformation eine Sicherheitsaktion ausführt, insbesondere wie Anzeige und/oder Übermittlung einer Warninformation und/oder Abschalten eines Gerätes und/oder Auslösen eines sicheren Zustands des Gerätes.

5. Verfahren zur Übermittlung von Telegrammen nach Anspruch 4,
**dadurch gekennzeichnet, dass**
ein dritter Busteilnehmer (E) das erste oder zweite Telegramm vollständig einliest,
wobei der dritte Busteilnehmer (E) das erste oder zweite Telegramm mittels der Telegrammlänge und/oder der Prüfinformation überprüft und bei einer Abweichung der Telegrammlänge von einem Sollwert für die Telegrammlänge und/oder bei einer Abweichung der Prüfinformation von einem Sollwert für die Prüfinformation eine Sicherheitsaktion ausführt, insbesondere wie Anzeige und/oder Übermittlung einer Warninformation und/oder Abschalten eines Gerätes und/oder Auslösen eines sicheren Zustands eines Gerätes.

6. Verfahren zur Übermittlung von Telegrammen nach mindestens einem der vorangegangenen Ansprüche,
**dadurch gekennzeichnet, dass**
die Anzahl der in dem Bussystem vorhandenen Kombinationen von Busteilnehmern (A, B, C, D, E) als Absender (A, B, C, D, E) und Empfänger (A, B, C, D, E) größer ist als die Anzahl der Kennungen,
und/oder dass
die Kennung einen Binärcode aufweist.

7. Verfahren zur Übermittlung von Telegrammen nach mindestens einem der vorangegangenen Ansprüche,
**dadurch gekennzeichnet, dass**
der erste Busteilnehmer (A, B) ein Umrichter (A) ist, der ein Gerät, insbesondere Antrieb, regelt, insbesondere wobei der Umrichter (A) als Aktion eine Stellgröße bestimmt,
wobei der zweite Busteilnehmer (B, A) ein erster Positionssensor (B), ist, der zeitlich wiederkehrend eine Position, insbesondere Winkelposition einer Welle des Gerätes oder Linearposition des Gerätes, bestimmt,
wobei der dritte Busteilnehmer (E) eine Überwachungseinrichtung (E) ist.

8. Verfahren zur Übermittlung von Telegrammen nach einem der Ansprüche 1 bis 6, **dadurch gekennzeichnet, dass**
der erste Busteilnehmer (A, B) ein erster Positionssensor (B), ist, der zeitlich wiederkehrend eine Position, insbesondere Winkelposition einer Welle des Gerätes oder Linearposition des Gerätes, bestimmt, insbesondere wobei der Positionssensor als Aktion ein Telegramm mit einer Positionsinformation sendet,
wobei der zweite Busteilnehmer (B, A) ein Umrichter (A) ist, der das Gerät, insbesondere den Antrieb regelt,
wobei der dritte Busteilnehmer (E) eine Überwachungseinrichtung (E) ist.

9. Verfahren zur Übermittlung von Telegrammen nach einem der Ansprüche 7 oder 8, **dadurch gekennzeichnet, dass**
das Bussystem einen zweiten Positionssensor (C) aufweist, der redundant zu dem ersten Positionssensor (B) die Position, insbesondere Winkelposition einer Welle des Gerätes oder Linearposition des Gerätes, bestimmt,
insbesondere wobei der erste Positionssensor (B) Telegramme mit Positionsinformationen an den Umrichter (A) sendet und der zweite Positionssensor (C) Telegramme mit Positionsinformationen an die Überwachungseinrichtung (E) sendet.

10. Verfahren zur Übermittlung von Telegrammen nach mindestens einem der vorangegangenen Ansprüche,
**dadurch gekennzeichnet, dass**
das Bussystem einen Sensor (D) aufweist, insbesondere einen Temperatursensor, der zeitlich wiederkehrend die Temperatur des Gerätes bestimmt.

11. Verfahren zur Übermittlung von Telegrammen nach mindestens einem der vorangegangenen Ansprüche,
**dadurch gekennzeichnet, dass**
das erste Telegramm eine zeitkritische Information, insbesondere Position, insbesondere Winkelposition einer Welle des Gerätes oder Linearposition des Gerätes, oder ein Triggersignal, aufweist,
und/oder dass
das zweite Telegramm Initialisierungsdaten und/oder Parametrierdaten, insbesondere Fehlerstatusdaten, aufweist.

12. Bussystem zur Durchführung eines Verfahrens zur Übermittlung von Telegrammen nach einem der Ansprüche 1 bis 11,
**dadurch gekennzeichnet, dass**
das Bussystem zumindest einen Umrichter (A), einen Positionssensor, insbesondere ersten Positionssensor (B), und eine Überwachungseinrichtung (E) aufweist,
wobei der Umrichter (A) zur Regelung eines Gerätes, insbesondere Antriebes, eingerichtet ist,
wobei der Positionssensor zur Bestimmung einer Position, insbesondere Winkelposition einer Welle des Gerätes oder Linearposition des Gerätes, eingerichtet ist,
wobei der Umrichter (A) und/oder der Positionssensor und/oder die Überwachungseinrichtung (E) mittels digitaler Schnittstellen miteinander verbunden sind,
insbesondere wobei die Überwachungseinrichtung (E) zur Bestimmung von Regelparametern für das Gerät eingerichtet ist und Vergleichsmittel aufweist, mit denen die Regelparameter mit von dem Umrichter (A) bestimmten Regelparametern vergleichbar sind,
wobei jeder Busteilnehmer eine Speichereinheit aufweist, die derart eingerichtet ist, dass in der Speichereinheit eine Tabelle abspeicherbar ist, so dass die Zuordnung eines Absenders und eines Empfängers zu einem jeweiligen Telegramm für jeden Busteilnehmer ausführbar ist.

13. Bussystem nach Anspruch 12,
**dadurch gekennzeichnet, dass**
das Bussystem einen zweiten Positionssensor (C) aufweist,
wobei der zweite Positionssensor (C) zur redundanten Bestimmung einer Position, insbesondere Winkelposition einer Welle des Gerätes oder Linearposition des Gerätes, eingerichtet ist,
wobei der zweite Positionssensor (C) mittels einer digitalen Schnittstelle mit dem Umrichter (A) und/oder dem ersten Positionssensor (B) und/oder der Überwachungseinrichtung (E) verbunden ist.

14. Bussystem nach mindestens einem der Ansprüche 12 bis 13,
**dadurch gekennzeichnet, dass**
das Bussystem einen Sensor (D) aufweist,
insbesondere wobei der Sensor (D) zur Bestimmung der Temperatur des Gerätes, insbesondere Antriebes, eingerichtet ist,
wobei der Sensor (D) mittels einer digitalen Schnittstelle mit dem Umrichter (A) und/oder dem ersten Positionssensor (B) und/oder der Überwachungseinrichtung (E) und/oder dem zweiten Positionssensor (C) verbunden ist.

## Claims

1. Method for transmitting telegrams between at least three bus subscribers (A, B, C, D, E) of a bus system,
each telegram having an identifier, information to be transferred and a telegram length, each telegram being sent by one bus subscriber (A, B, C, D, E) as the sender (A, B, C, D, E) and being read out, in particular evaluated, by another bus subscriber (A, B, C, D, E) as the recipient (A, B, C, D, E),
**characterised in that**
the sender (A, B, C, D, E) and the recipient (A, B, C, D, E) of each telegram are unambiguously assigned to the particular telegram by means of the particular identifier and the particular telegram length,
a first bus subscriber (A, B) and a second bus subscriber (B, A) sending telegrams having identical identifiers,
the second bus subscriber (B, A), in a first method step, sending a telegram to the first bus subscriber (A, B),
each bus subscriber having a memory unit, which is configured in such a way that a table can be stored in the memory unit such that a sender and a recipient can be assigned to a particular telegram for each bus subscriber,
the table being kept available on all the bus subscribers,
four tuples recording the assignment rule between the sender, recipient, identifier and length of the telegram in the table,
the first bus subscriber (A, B), in a second method step, inputting the identifier of the telegram and storing the first bus subscriber (A, B) as the recipient of the telegram in the table available in its memory unit, and storing the second bus subscriber (B, A) as the sender of the telegram and unambiguously assigning it to the telegram,
the identifier in particular being sent prior to the information to be transferred.

2. Method for transmitting telegrams according to claim 1,
**characterised in that**
the identifier of the telegram is evaluated first, the identifier being assigned, by means of a table, to a subset of possible senders (A, B, C, D, E) and recipients (A, B, C, D, E), said subset being smaller than the set of all the senders (A, B, C, D, E) and recipients (A, B, C, D, E) of the bus system,
the telegram length being evaluated thereafter, with the telegram length being unambiguously assigned, by means of the table, to a sender (A, B, C, D, E) and to a recipient (A, B, C, D, E) from the subset.

3. Method for transmitting telegrams according to at least one of the preceding claims, **characterised in that**
the first bus subscriber (A, B) receives a first telegram from another bus subscriber (A, B, C, D, E), said telegram having an identifier that can be used by the first bus subscriber (A, B) as the sender (A, B, C, D, E),
the first bus subscriber (A, B) inputting the first telegram, up to and including the information to be transferred, and triggering an action,
the first bus subscriber (A, B) in particular inputting the first telegram incompletely.

4. Method for transmitting telegrams according to at least one of the preceding claims, **characterised in that**
each telegram has check information, which is sent after the information to be transferred, the first bus subscriber (A, B) receiving a second telegram from another bus subscriber (A, B, C, D, E), said telegram having an identifier that is different from the identifiers that can be used by the first bus subscriber (A, B) as the sender (A, B, C, D, E),
the first bus subscriber (A, B) inputting the second telegram completely and triggering an action
and/or
the first bus subscriber (A, B) inputting the second telegram completely and reviewing the second telegram by means of the check information, and performing a safety action, in particular such as displaying and/or transmitting alert information and/or switching a device off and/or triggering a safe state of the device, if the telegram length deviates from a setpoint for the telegram length and/or the check information deviates from a setpoint for the check information.

5. Method for transmitting telegrams according to claim 4,
**characterised in that**
a third bus subscriber (E) inputs the first or second telegram completely,
the third bus subscriber (A, B) reviewing the first or second telegram by means of the telegram length and/or the check information, and performing a safety action, in particular such as displaying and/or transmitting alert information and/or switching a device off and/or triggering a safe state of a device, if the telegram length deviates from a setpoint for the telegram length and/or the check information deviates from a setpoint for the check information.

6. Method for transmitting telegrams according to at least one of the preceding claims, **characterised in that**
the number of combinations, available in the bus system, of bus subscribers (A, B, C, D, E) as senders (A, B, C, D, E) and recipients (A, B, C, D, E) is greater than the number of identifiers,
and/or **in that**
the identifier has a binary code.

7. Method for transmitting telegrams according to at least one of the preceding claims, **characterised in that**
the first bus subscriber (A, B) is a converter that controls a device, in particular a drive, the converter (A) in particular determining a manipulated variable as the action,
the second bus subscriber (B, A) being a first position sensor (B), which repeatedly determines a position, in particular an angular position, of a shaft of the device, or a linear position of the device,
the third bus subscriber (E) being a monitoring apparatus (E).

8. Method for transmitting telegrams according to any of claims 1 to 6,
**characterised in that**
the first bus subscriber (A, B) is a first position sensor (B), which repeatedly determines a position, in particular an angular position, of a shaft of the device, or a linear position of the device, the position sensor in particular sending a telegram containing position information as the action,
the second bus subscriber (B, A) being a converter that controls the device, in particular the drive,
the third bus subscriber (E) being a monitoring apparatus (E).

9. Method for transmitting telegrams according to any of claims 7 or 8,
**characterised in that**
the bus system has a second position sensor (C), which determines the position, in particular the angular position, of a shaft of the device, or the linear position of the device, in a redundant manner with respect to the first position sensor (B),
in particular, the first position sensor (B) sending telegrams containing position information to the converter (A) and the second position sensor (C) sending telegrams containing position information to the monitoring apparatus (E).

10. Method for transmitting telegrams according to at least one of the preceding claims, **characterised in that**
the bus system has a sensor (D), in particular a temperature sensor, which repeatedly determines the temperature of the device.

11. Method for transmitting telegrams according to at least one of the preceding claims, **characterised in that**
the first telegram has time-critical information, in particular the position, in particular the angular position, of a shaft of the device, or the linear position of the device, or a trigger signal,
and/or **in that**
the second telegram has initialisation data and/or parameterisation data, in particular fault-status data.

12. Bus system for carrying out a method for transmitting telegrams according to any of claims 1 to 11,
**characterised in that**
the bus system has at least a converter (A), a position sensor, in particular a first position sensor (B), and a monitoring apparatus (E),
the converter (A) being configured to control a device, in particular a drive,
the position sensor being configured to determine a position, in particular an angular position, of a shaft of the device, or a linear position of the device,
the converter (A) and/or the position sensor and/or the monitoring apparatus (E) being interconnected by means of digital interfaces,
the monitoring apparatus (E) in particular being configured to determine control parameters for the device, and having comparison means by which the control parameters can be compared with control parameters determined by the converter (A),
each bus subscriber having a memory unit, which is configured in such a way that a table can be stored in the memory unit such that a sender and a recipient can be assigned to a particular telegram for each bus subscriber.

13. Bus system according to claim 12,
**characterised in that**
the bus system has a second position sensor (C),
the second position sensor (C) being configured to determine a position, in particular an angular position, of a shaft of the device, or a linear position of the device, in a redundant manner,
the second position sensor (C) being connected to the converter (A) and/or to the first position sensor (B) and/or to the monitoring apparatus (E) by means of a digital interface.

14. Bus system according to at least one of claims 12 to 13,
**characterised in that**
the bus system has a sensor (D),
the sensor (D) in particular being configured to determine the temperature of the device, in particular of the drive,
the sensor (D) being connected to the converter (A) and/or to the first position sensor (B) and/or to the monitoring apparatus (E) and/or to the second position sensor (C) by means of a digital interface.

## Revendications

1. Procédé de transfert de télégrammes entre au moins trois utilisateurs de bus (A, B, C, D, E) d'un système de bus,
chaque télégramme présentant un identifiant, une information à transmettre et une longueur de télégramme,
un télégramme respectif étant envoyé par un utilisateur de bus (A, B, C, D, E) comme expéditeur (A, B, C, D, E) et étant lu, en particulier évalué, par un autre utilisateur de bus (A, B, C, D, E) comme destinataire (A, B, C, D, E),
**caractérisé en ce que** l'expéditeur (A, B, C, D, E) et le destinataire (A, B, C, D, E) du télégramme respectif sont associés de manière univoque au télégramme respectif au moyen de l'identifiant respectif et de la longueur de télégramme respective,
un premier utilisateur de bus (A, B) et un deuxième utilisateur de bus (B, A) envoyant des télégrammes ayant des identifiants identiques,
dans lequel, dans une première étape de procédé, le deuxième utilisateur de bus (B, A) envoie un télégramme au premier utilisateur de bus (A, B),
chaque utilisateur de bus présentant une unité de mémoire qui est aménagée de telle sorte que dans l'unité de mémoire un tableau peut être stocké de sorte que l'association d'un expéditeur et d'un destinataire à un télégramme respectif pour chaque utilisateur de bus peut être effectuée,
le tableau étant disponible sur tous les utilisateurs de bus,
des quadruplets retenant la règle d'attribution entre l'expéditeur, le destinataire, l'identifiant et la longueur du télégramme dans le tableau,
dans lequel, dans une deuxième étape de procédé, le premier utilisateur de bus (A, B) lit l'identifiant du télégramme et stocke dans le tableau présent dans son unité de mémoire le premier utilisateur de bus (A, B) comme destinataire du télégramme et stocke le deuxième utilisateur de bus (B, A) comme expéditeur du télégramme et l'associe au télégramme de manière univoque,
l'identifiant étant en particulier envoyé temporellement avant l'information à transmettre.

2. Procédé de transfert de télégrammes selon la revendication 1, **caractérisé en ce que** d'abord l'identifiant du télégramme est évalué, l'identifiant étant associé au moyen d'un tableau à un sous-ensemble d'expéditeurs (A, B, C, D, E) et de destinataires (A, B, C, D, E) possibles qui est inférieur à l'ensemble de tous les expéditeurs (A, B, C, D, E) et destinataires (A, B, C, D, E) du système de bus,
la longueur de télégramme étant évaluée ensuite, la longueur de télégramme étant associée au moyen du tableau de manière univoque à un expéditeur (A, B, C, D, E) et à un destinataire (A, B, C, D, E) du sous-ensemble.

3. Procédé de transfert de télégrammes selon au moins l'une des revendications précédentes, **caractérisé en ce que** le premier utilisateur de bus (A, B) reçoit un premier télégramme d'un autre utilisateur de bus (A, B, C, D, E) qui présente un identifiant qui peut être utilisé par le premier utilisateur de bus (A, B) comme expéditeur (A, B, C, D, E),
le premier utilisateur de bus (A, B) lisant le premier télégramme jusqu'à l'information à transmettre incluse et déclenchant une action,
le premier utilisateur de bus (A, B) lisant en particulier le premier télégramme en partie.

4. Procédé de transfert de télégrammes selon au moins l'une des revendications précédentes,
**caractérisé en ce que** chaque télégramme présente une information de contrôle qui est envoyée temporellement après l'information à transmettre,
le premier utilisateur de bus (A, B) recevant un deuxième télégramme d'un autre utilisateur de bus (A, B, C, D, E) qui présente un identifiant qui est différent des identifiants utilisables par le premier utilisateur de bus (A, B) comme expéditeur (A, B, C, D, E),
le premier utilisateur de bus (A, B) lisant le deuxième télégramme en entier et déclenchant une action, et/ou
dans lequel le premier utilisateur de bus (A, B) lit le deuxième télégramme en entier et contrôle le deuxième télégramme au moyen de l'information de contrôle, et en cas d'écart de la longueur de télégramme par rapport à une valeur de consigne pour la longueur de télégramme et/ou en cas d'écart de l'information de contrôle par rapport à une valeur de consigne pour l'information de contrôle, exécute une action de sécurité, en particulier comme l'affichage et/ou le transfert d'un avertissement et/ou l'arrêt d'un appareil et/ou le déclenchement d'un état sûr de l'appareil.

5. Procédé de transfert de télégrammes selon la revendication 4,
**caractérisé en ce qu'**un troisième utilisateur de bus (E) lit le premier ou deuxième télégramme en entier,
dans lequel le troisième utilisateur de bus (E) contrôle le premier ou deuxième télégramme au moyen de la longueur de télégramme et/ou de l'information de contrôle, et en cas d'écart de la longueur de télégramme par rapport à une valeur de consigne pour la longueur de télégramme et/ou en cas d'écart de l'information de contrôle par rapport à une valeur de consigne pour l'information de contrôle, exécute une action de sécurité, en particulier comme l'affichage et/ou le transfert d'un avertissement et/ou l'arrêt d'un appareil et/ou le déclenchement d'un état sûr d'un appareil.

6. Procédé de transfert de télégrammes selon au moins l'une des revendications précédentes,
**caractérisé en ce que** le nombre des combinaisons d'utilisateurs de bus (A, B, C, D, E) comme expéditeurs (A, B, C, D, E) et comme destinataires (A, B, C, D, E) est supérieur au nombre des identifiants, et/ou
**en ce que** l'identifiant présente un code binaire.

7. Procédé de transfert de télégrammes selon au moins l'une des revendications précédentes,
**caractérisé en ce que** le premier utilisateur de bus (A, B) est un convertisseur (A) qui régule un appareil, en particulier un mécanisme d'entraînement, l'action du convertisseur (A) consistant en particulier à déterminer une grandeur de réglage,
le deuxième utilisateur de bus (B, A) étant un premier capteur de position (B) qui détermine de manière récurrente dans le temps une position, en particulier une position d'angle d'un arbre de l'appareil ou une position linéaire de l'appareil,
le troisième utilisateur de bus (E) étant un dispositif de surveillance (E).

8. Procédé de transfert de télégrammes selon l'une quelconque des revendications 1 à 6,
**caractérisé en ce que** le premier utilisateur de bus (A, B) est un premier capteur de position (B) qui détermine de façon récurrente dans le temps une position, en particulier une position d'angle d'un arbre de l'appareil ou une position linéaire de l'appareil, l'action du capteur de position consistant en particulier à envoyer un télégramme comprenant une information de position,
le deuxième utilisateur de bus (B, A) étant un convertisseur (A) qui régule l'appareil, en particulier le mécanisme d'entraînement,
le troisième utilisateur de bus (E) étant un dispositif de surveillance (E).

9. Procédé de transfert de télégrammes selon l'une quelconque des revendications 7 et 8,
**caractérisé en ce que** le système de bus présente un deuxième capteur de position (C) qui détermine de façon redondante par rapport au premier capteur de position (B) la position, en particulier la position d'angle d'un arbre de l'appareil ou la position linéaire de l'appareil,
le premier capteur de position (B) envoyant en particulier des télégrammes comprenant des informations de position au convertisseur (A), et le deuxième capteur de position (C) envoyant des télégrammes comprenant des informations de position au dispositif de surveillance (E) .

10. Procédé de transfert de télégrammes selon au moins l'une des revendications précédentes, **caractérisé en ce que** le système de bus présente un capteur (D), en particulier un capteur de température qui détermine de manière récurrente dans le temps la température de l'appareil.

11. Procédé de transfert de télégrammes selon au moins l'une des revendications précédentes,
**caractérisé en ce que** le premier télégramme présente une information critique en termes de temps, en particulier une position, en particulier une position d'angle d'un arbre de l'appareil ou une position linéaire de l'appareil, ou un signal de déclenchement, et/ou **en ce que**
le deuxième télégramme présente des données d'initialisation et/ou des données de paramétrage, en particulier des données d'état d'erreur.

12. Système de bus permettant d'exécuter un procédé de transfert de télégrammes selon l'une quelconque des revendications 1 à 11,
**caractérisé en ce que** le système de bus présente au moins un convertisseur (A), un capteur de position, en particulier un premier capteur de position (B), et un dispositif de surveillance (E),
le convertisseur (A) étant aménagé pour réguler un appareil, en particulier un mécanisme d'entraînement,
le capteur de position étant aménagé pour déterminer une position, en particulier une position d'angle d'un arbre de l'appareil ou une position linéaire de l'appareil,
le convertisseur (A) et/ou le capteur de position et/ou le dispositif de surveillance (E) étant reliés les uns aux autres au moyen d'interfaces numériques,
le dispositif de surveillance (E) étant en particulier aménagé pour déterminer des paramètres de régulation pour l'appareil et présentant des moyens de comparaison permettant de comparer les paramètres de régulation avec les paramètres de régulation déterminés par le convertisseur (A),
chaque utilisateur de bus présentant une unité de mémoire qui est aménagée de telle sorte qu'un tableau peut être stocké dans l'unité de mémoire de sorte que l'association d'un expéditeur et d'un destinataire à un télégramme respectif peut être effectuée pour chaque utilisateur de bus.

13. Système de bus selon la revendication 12, **caractérisé en ce que** le système de bus présente un deuxième capteur de position (C),
le deuxième capteur de position (C) étant aménagé pour la détermination redondante d'une position, en particulier d'une position d'angle d'un arbre de l'appareil ou d'une position linéaire de l'appareil,
le deuxième capteur de position (C) étant relié au moyen d'une interface numérique au convertisseur (A) et/ou au premier capteur de position (B) et/ou au dispositif de surveillance (E).

14. Système de bus selon l'une quelconque des revendications 12 à 13,
**caractérisé en ce que** le système de bus présente un capteur (D),
le capteur (D) étant aménagé en particulier pour déterminer la température de l'appareil, en particulier du mécanisme d'entraînement,
le capteur (D) étant relié au moyen d'une interface numérique au convertisseur (A) et/ou au premier capteur de position (B) et/ou au dispositif de surveillance (E) et/ou au deuxième capteur de position (C).
